# EUROPEAN PATENT SPECIFICATION

(11) **EP 3 477 117 B1**
(45) Date of publication and mention of the grant of the patent: **09.09.2020**
(21) Application number: 18201025.6
(22) Date of filing: 17.10.2018
(51) Int. Cl.: F04D 29/02, F16J 13/02

(54) **SEALED CLOSURE**
ABGEDICHTETER VERSCHLUSS
FERMETURE ÉTANCHE

(30) Priority: 20.10.2017 US 201715789713
(43) Date of publication of application: 01.05.2019
(73) Proprietor: Hamilton Sundstrand Corporation, Charlotte, NC 28217-4578 (US)
(72) Inventor: SASSCER, Gary, Leaf River, IL Illinois 61047 (US); PUGLIESE, Jordan Christopher, Woodstock, IL Illinois 60098 (US)
(74) Representative: Dehns

(56) References cited:
- DE-A1-102013 113 896
- DE-A1-102017 125 977
- Anonymous: "Galvanic corrosion - Wikipedia", , 9 January 2014 (2014-01-09), XP055398678, Retrieved from the Internet: URL:https://en.wikipedia.org/w/index.php?t itle=Galvanic_corrosion&oldid=589895544 [retrieved on 2017-08-15]

## Description

### BACKGROUND

This disclosure relates to the joining of metal bodies.

Metal bodies can be joined together for a wide variety of applications, including but not limited to housings for all sorts of mechanical or electronic components. In some cases, articles comprising different metal compositions may be joined together. When the different metal compositions have different electrode potentials (i.e., one metal is more noble than another metal), the presence of water can act as an electrolyte and promote an electrochemical reaction leading to galvanic corrosion. (see document DE-A-102017125977)

### BRIEF DESCRIPTION

Disclosed is a closure comprising a first body comprising a first metal with a first electrode potential, and a second body comprising a second metal with a second electrode potential different than the first electrode potential. The first and second bodies are joined together along a connection interface between the first and second bodies to form the closure separating a first space on a first side of the closure from a second space on a second side of the closure. The connection interface extends from the first side of the closure to the second side of the closure, and comprises a close-coupled portion between the first side of the closure and the second side of the closure, and a seal portion between the first side of the closure and the second side of the closure. A polymer film is disposed between the first and second bodies along the close-coupled portion of the connection interface.

Also disclosed is a method of joining metal bodies, comprising disposing a polymer film between close-coupling surfaces of first and second bodies, said first body comprising a first metal with a first electrode potential and said second body comprising a second metal with a second electrode potential different than the first electrode potential. Then, the first body and the second body are joined to form a closure along a connection interface separating a first space on a first side of the closure from a second space on a second side of the closure, with the connection interface extending from the first side of the closure to the second side of the closure and comprising a close-coupled portion comprising the polymer film between close-coupling surfaces of the first and second bodies, and a seal portion between the first side of the closure and the second side of the closure.

In some embodiments, the seal portion of the connection interface can comprise an elastomeric ring or gasket.

In some embodiments, the seal portion of the connection interface can further comprise a retention feature that retains the elastomeric ring or gasket.

In any one or combination of the foregoing embodiments, the polymer film can comprise a polymer selected from polyimides, polyamides, polysulfones, polyaryl ether ketones (e.g., polyether ether ketone), polyesters, polyethers, polypropylene, or polyurethanes, polycarbonates.

In any one or combination of the foregoing embodiments, the polymer film can have a thickness of less than 0.002 inches.

In any one or combination of the foregoing embodiments, the first and second bodies can comprise, respectively, a titanium alloy and an aluminum alloy, or steel and an aluminum alloy, or a magnesium alloy and an aluminum alloy, or a magnesium alloy and steel, or a magnesium alloy and a titanium alloy.

In any one or combination of the foregoing embodiments, the closure can further comprise a fastener joining the first and second bodies along the close-coupled portion of the connection interface.

In any one or combination of the foregoing embodiments, the fastener can comprise a plurality of threaded fasteners in holes through the first and second bodies along the close-coupled portion of the connection interface.

In any one or combination of the foregoing embodiments, the first and second bodies can be joined along planar surfaces in the close-coupled portion of the connection interface.

In any one or combination of the foregoing embodiments, the polymer film can cover the entirety of the close-coupled portion of the connection interface.

In any one or combination of the foregoing embodiments, the first and second bodies joined together can form an enclosure around an inner space on a side of the closure. In some embodiments, the closure can extend fully around a perimeter of the enclosure.

In some embodiments, a pump comprising an impeller disposed in a housing comprising the closure of any one or combination of the foregoing embodiments.

In some embodiments, the above-described method can include attaching the polymer film to the close-coupling surface of the first body with an adhesive.

In any one or combination of the above method embodiments, the method can further comprise disposing a polymer film on the close-coupling surface of the second body.

In any one or combination of the above method embodiments, the method can further comprise joining includes attaching the first and second bodies with a fastener along the close-coupled portion of the connection interface.

In any one or combination of the above method embodiments, the polymer film can be pre-cut to conform to the close-coupled portion of the connection interface.

A method is disclosed of servicing a closure comprising a first body comprising a first metal with a first electrode potential joined to a second body comprising a second metal with a second electrode potential different than the first electrode potential along a connection interface between the first and second bodies to form the closure separating a first space on a first side of the closure from a second space on a second side of the closure. The connection interface extends from the first side of the closure to the second side of the closure and comprises a close-coupled portion between the first side of the closure and the second side of the closure, and a seal portion between the first side of the closure and the second side of the closure. The servicing method comprising separating the first and second bodies, applying a polymer film to the close-coupled portion of either or both of the first and second bodies, and rejoining the first and second bodies along the connection interface.

In some embodiments, the servicing method can further comprise removing polymer residue from either or both of the close-coupled portions of the first and second bodies after separating the first and second bodies.

### BRIEF DESCRIPTION OF THE DRAWINGS

The following descriptions should not be considered limiting in any way. With reference to the accompanying drawings, like elements are numbered alike:
FIG. 1 is a schematic depiction of an example embodiment of an enclosure as described herein; and
FIG. 2 is a schematic depiction of a pump with housing comprising an enclosure as described herein.

### DETAILED DESCRIPTION

A detailed description of one or more embodiments of the disclosed apparatus and method are presented herein by way of exemplification and not limitation with reference to the Figures.

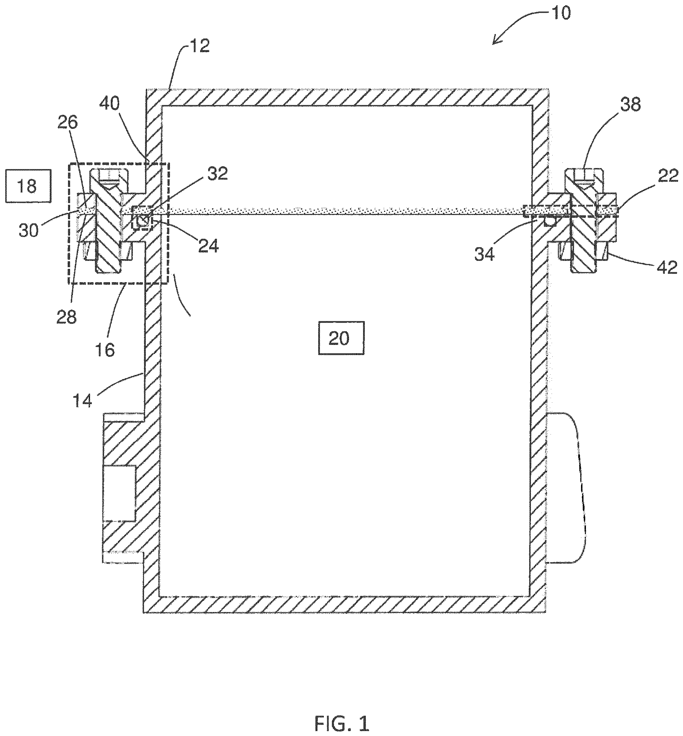

With reference to FIG. 1, an enclosure 10 is schematically shown. As shown in FIG. 1, enclosure 10 comprises a first body 12 and a second body 14 joined together along closure 16. Closure 16 is made along a connection interface that extends from a space 18 (e.g., an external space) on a first side of the closure 16 to a space 20 (e.g., an internal space) on a second side of the closure 16. As further shown in FIG. 1, the connection interface comprises a close-coupled portion 22 between the first side of the closure and the second side of the closure, and a seal portion 24 between the first side of the closure and the second side of the closure at space 20. Close-coupled portion 22 comprises a coupling surface 26 on the article 12 and a coupling surface 28 on the article 14, with a polymer film 30 between the coupling surfaces 26 and 28. The seal portion 24 can include any type of sealing configuration, including but not limited to lip-seal configurations, folded seal configurations such as J-seals or W-seals, or welded bead seals, to name a few. In some embodiments, the seal portion 24 can include an elastomeric (e.g., silicone rubber, polybutadiene rubber), metal, ceramic, or other material type of seal or gasket member such as the o-ring 32 shown in FIG. 1, which can be held in place with a seal retention feature such as inner seal support member 34 integrated with the body 14.

As mentioned above, the connection interface includes a close-coupled portion 22. By "close-coupled", it is meant that coupling surfaces 26 and 28 are in close enough contact that, in the absence of the polymer film 30 the presence of a liquid electrolyte such as water would form an electrolytic cell with the different metals of the bodies 12 and 14 to cause galvanic corrosion. In some embodiments, the coupling surfaces 26 and 28 are in each in substantially contiguous physical contact with the polymer film 30 sandwiched in between the coupling surfaces 26 and 28. In some embodiments, the coupling surfaces can have a space dimension between them (which may be fully occupied by the polymer film) in a range having a low end of greater than zero, 0.020 mm (0.0008 inches) or 0.023 mm (0.0009 inches), and an upper end of 0.025 mm (0.0010 inches), 0.028 mm (0.0011 inches), 0.030 mm (0.0012 inches), or 0.051 mm (0.002 inches). These range endpoints can be independently combined to form a number of different ranges, and all ranges formed by each such possible endpoint combination are hereby expressly disclosed. In some embodiments, the space dimension can be about 0.025 mm (0.001 inches).

As mentioned above, the first and second bodies comprise different metals with different electrode potentials. As used herein, the term "metal" includes both metal alloys. In some embodiments, the bodies can comprise different classes of metal alloys, such as a titanium alloy and an aluminum alloy, or stainless steel and an aluminum alloy. In some embodiments, the bodies can comprise different alloy compositions of the same class, such as aluminum alloys of different compositions and electrode potentials. Other galvanic combinations include, but are not limited to, steel and an aluminum alloy, or a magnesium alloy and an aluminum alloy, or a magnesium alloy and steel, or a magnesium alloy and a titanium alloy.

The polymer film (30 in FIG. 1) can comprise any of a wide variety of polymer materials adapted for the demands and conditions for a particular application. As used herein the term "film" means a discrete solid sheet of polymer disposed in a layered arrangement with close-coupling surfaces on either side of the sheet or film, as distinguished from a coating deposited as a liquid (or as a powder that liquefies and flows during cure) layer that solidifies as a surface coating. Polymer films can be fabricated from known film manufacturing techniques such as extrusion of a thermoplastic polymer. Examples of polymers for films include but are not limited to polyimides, polyamides, polysulfones, polyaryl ether ketones (e.g., polyether ether ketone), polyesters, polyethers, polypropylene, polyurethanes, polycarbonates, polystyrene, etc. In some embodiments, the polymer film comprises a polyimide. The polymer film protects at least one of the close-coupling surfaces from contact with water, thus providing a technical effect of promoting resistance of the closure to galvanic corrosion. In some embodiments, the polymer film can provide an electrically non-conductive barrier between the first and second bodies to prevent formation of an electrolytic circuit. In some embodiments, the polymer film is impermeable with respect to water and can protect the close-coupling surfaces from contact with water. It should be noted that the technical effect of polymer film promoting resistance to galvanic corrosion of the polymer film can be distinguished from a gasket such as a flange gasket used to provide a seal that prevents fluid flow across a closure. In the closure shown in FIG. 1, such a seal can provided by the o-ring 32 in cooperation with other portions of the seal portion 24, so the polymer film can be significantly thinner than a conventional gasket. In some embodiments, a thin polymer film can provide additional technical effects of promoting a tight tolerance fit between the coupling surfaces 26 and 28 for overall structural integrity and to promote proper engagement of components in the seal portion 24 of the connection interface. Accordingly, in some embodiments, the polymer film can have a thickness in a range having a low end of greater than zero, 0.020 mm (0.0008 inches) or 0.023 mm (0.0009 inches), and an upper end of 0.025 mm (0.0010 inches), 0.028 mm (0.0011 inches), 0.030 mm (0.0012 inches), or 0.051 mm (0.002 inches). These range endpoints can be independently combined to form a number of different ranges, and all ranges formed by each such possible endpoint combination are hereby expressly disclosed. In some embodiments, film thickness can be about 0.025 mm (0.001 inches=.

In some embodiments, the closure can be secured by one or more fasteners, which can be located for example in the area of the close-coupled portion of the closure. As exemplified in FIG. 1, bolts 36 and 38 are shown attached with nuts 40 and 42 through the bodies 12 and 14 at the close-coupled portion 22. These are of course only examples for illustration purposes, and other types of fasteners can be used such as clamps, screws, etc. Instead of nuts 40 and 42 disposed external to the bodies 12, 14, either of the bodies can included a threaded bore hole to receive a screw or bolt. In some embodiments where metal fasteners are used, they can be coated with a coating such as a primer sealer to prevent an electrical connection between the first and second bodies through the fastener. In some embodiments, the bringing of the close-coupling surfaces 26 and 28 into close coupling, such as through attachment of the fasteners, can place the seal 32 under compressive stress.

In some embodiments, a method of joining metal bodies comprises joining them along a closure as described herein. With reference to the example embodiment of FIG. 1, the polymer film 30, which can be pre-cut to cover the desired portion(s) of the connection interface, is disposed between close-coupling surface 26 and 28, and the first and second bodies 12, 14 are joined together to form a closure along the connection interface with the close-coupled portion 22 comprising the polymer film 30 between the close-coupling surfaces 26 and 28. In some embodiments, the polymer film can be attached to one of the close-coupling surfaces 26 and 28 such as with an adhesive to hold it in position prior to joining the bodies. In some embodiments, the polymer film can be temporarily held in position on one of the close-coupling surfaces 26, 28 by surface active forces such as with a liquid surfactant. In some embodiments, separate polymer films can be attached to each of the close-coupling surfaces 26, 28 prior to joining the bodies. The adhesive or surface active agent can be applied to the close-coupling surfaces or either or both sides of the film at the point of assembly, or can be pre-applied on either or both sides of the film such as with a peel-and-stick adhesive. These manufacturing techniques can provide a beneficial technical effect of promoting efficient manufacturing. Compared to embodiments in which close-coupled surfaces are coated with a primer coating in an attempt to protect metal surfaces from water and the accompanying requirement to route the work-in-process part to a paint shop for time-consuming surface preparation and painting, disposition of the polymer film 30 between the close-coupling surfaces 26, 28 (and which can be pre-cut to conform to the close-coupling surfaces) can be readily accomplished at the point of final assembly.

The above manufacturing techniques can be readily adapted for field repair operations, and in some embodiments can provide additional technical benefits thereto. For example, when primer coatings are used to protect close-coupled metal surfaces, parts of the coating can delaminate during disassembly, which necessitates a highly disruptive process in which the entire closure assembly must be removed from service and replaced with a unit from inventory while the serviced part is reprocessed with surface preparation and painting. Utilizing the techniques described herein, the surface preparation can be simplified to easy removal of old film or coating during disassembly in the field using solvents if needed, and attachment of polymer film to the close-coupling surface(s) during re-assembly in the field.

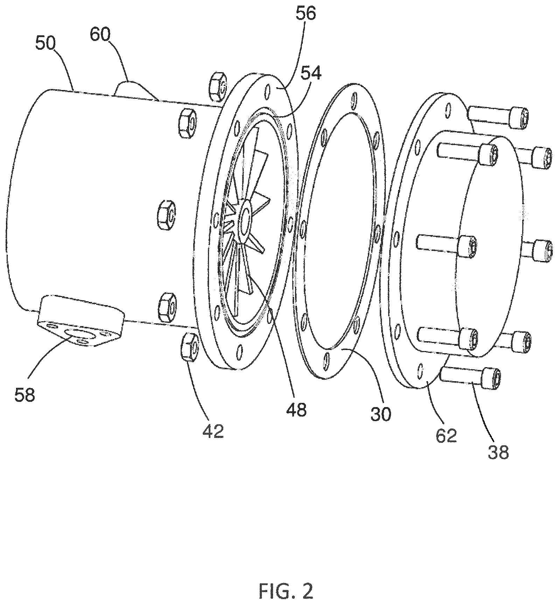

It should be noted that although FIG. 1 shows an enclosure 10 in which closure 16 extends around a perimeter of the enclosure, the closure can be used in various other configurations such as a hatch or doorway in a barrier structure between enclosed or open spaces on either side of the barrier. In some embodiments, closure embodiments such as those described herein can be utilized to enclose a housing structure around a functional component. An example embodiment is shown in FIG. 2 in which a pump impeller housing 50 for an impeller 48 is fitted with inlet 58 and outlet 60. The impeller housing 50 further includes a close-coupling surface 56 and a seal portion 54. The impeller housing 50 is joined to a power transmission assembly housing component 62, which has close-coupled surface(s) and seal portions (not shown) corresponding to those on the impeller housing 50. As shown in the exploded view of FIG. 2, a polymer film 30 corresponding in shape to the close-coupling surface 56 is disposed over the close-coupling surface 56 and sandwiched between the close-coupling surfaces of impeller housing 50 and housing component 62, and the housing component 62 and impeller housing 52 are attached with threaded fasteners 66.

The term "about", if used, is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A closure (16), comprising
a first body (12) comprising a first metal with a first electrode potential; and
a second body (14) comprising a second metal with a second electrode potential different than the first electrode potential, said first and second bodies (12, 14) joined together along a connection interface between the first and second bodies to form the closure separating a first space (18) on a first side of the closure (16) from a second space (20) on a second side of the closure (16), said connection interface extending from the first side of the closure (16) to the second side of the closure (16) and comprising a close-coupled portion (22) between the first side of the closure (16) and the second side of the closure (16), and a seal portion (24) between the first side of the closure (16) and the second side of the closure (16); **characterised in that** said closure further comprises
a discrete solid sheet of polymer (30) between the first and second bodies (12, 14) along the close-coupled portion (22) of the connection interface.

2. The closure of claim 1, wherein the seal portion (24) of the connection interface comprises an elastomeric ring or gasket, and preferably further comprises a retention feature that retains the elastomeric ring or gasket.

3. The closure of any preceding claim, wherein the discrete solid sheet of polymer (30) comprises a polymer selected from polyimides, polyamides, polysulfones, polyaryl ether ketones (e.g., polyether ether ketone), polyesters, polyethers, polypropylene, or polyurethanes, polycarbonates.

4. The closure of any preceding claim, wherein the discrete solid sheet of polymer (30) has a thickness of less than 0.051 mm (0.002 inches).

5. The closure of any preceding claim, wherein the first and second bodies (12, 14) comprise, respectively, a titanium alloy and an aluminum alloy, or steel and an aluminum alloy, or a magnesium alloy and an aluminum alloy, or a magnesium alloy and steel, or a magnesium alloy and a titanium alloy.

6. The closure of any preceding claim, further comprising a fastener joining the first and second bodies (12, 14) along the close-coupled portion (22) of the connection interface, said fastener preferably comprising a plurality of threaded fasteners in holes through the first and second bodies along the close-coupled portion of the connection interface.

7. The closure of any preceding claim, wherein the first and second bodies (12, 14) are joined along planar surfaces in the close-coupled portion (22) of the connection interface.

8. The closure of any preceding claim, wherein the discrete solid sheet of polymer (30) covers the entirety of the close-coupled portion (22) of the connection interface.

9. An enclosure comprising the closure (16) of any preceding claim, wherein said first and second bodies (12, 14) joined together form an enclosure (10) around an inner space on a side of the closure (16), said closure (16) preferably extending fully around a perimeter of enclosure.

10. A pump comprising an impeller (48) disposed in a housing (50) comprising the closure (16) of any preceding claim.

11. A method of joining metal bodies, comprising:
disposing a discrete solid sheet of polymer (30) between close-coupling surfaces of first and second bodies (12, 14), said first body (12) comprising a first metal with a first electrode potential and said second body (14) comprising a second metal with a second electrode potential different than the first electrode potential; and
joining the first body (12) and the second body (14) to form a closure along a connection interface separating a first space (18) on a first side of the closure (16) from a second space (20) on a second side of the closure (16), said connection interface extending from the first side of the closure (16) to the second side of the closure (16) and comprising a close-coupled portion (22) between the first side of the closure (16) and the second side of the closure (16) comprising the discrete solid sheet of polymer (30) between close-coupling surfaces of the first and second bodies (12, 14), and a seal portion (24) between the first side of the closure (16) and the second side of the closure (16).

12. The method of claim 11, including attaching the discrete solid sheet of polymer (30) to the close-coupling surface of the first body with an adhesive.

13. The method of claims 11 or 12, further comprising disposing a discrete solid sheet of polymer (30) on the close-coupling surface of the second body (14).

14. A method of servicing the closure of any of claims 1-9, comprising:
separating the first and second bodies (12, 14);
applying a discrete solid sheet of polymer (30) to the close-coupled portion of either or both of the first and second bodies (12, 14); and
rejoining the first and second bodies (12, 14) along the connection interface.

15. The method of claim 14, further comprising removing polymer residue from either or both of the close-coupled portions of the first and second bodies (12, 14) after separating the first and second bodies (12, 14).

## Patentansprüche

1. Verschluss (16), umfassend:
einen ersten Körper (12), umfassend ein erstes Metall mit einem ersten Elektrodenpotential; und
einen zweiten Körper (14), umfassend ein zweites Metall mit einem zweiten Elektrodenpotential, das sich von dem ersten Elektrodenpotential unterscheidet, wobei der erste und der zweite Körper (12, 14) entlang einer Verbindungsschnittstelle zwischen dem ersten und dem zweiten Körper miteinander verbunden sind, um den Verschluss zu bilden, welcher einen ersten Raum (18) auf einer ersten Seite des Verschlusses (16) von einem zweiten Raum (20) auf einer zweiten Seite des Verschlusses (16) trennt, wobei die Verbindungsschnittstelle sich von der ersten Seite des Verschlusses (16) zur zweiten Seite des Verschlusses (16) erstreckt und einen eng gekoppelten Abschnitt (22) zwischen der ersten Seite des Verschlusses (16) und der zweiten Seite des Verschlusses (16) und einen Dichtungsabschnitt (24) zwischen der ersten Seite des Verschlusses (16) und der zweiten Seite des Verschlusses (16) umfasst; **dadurch gekennzeichnet, dass** der Verschluss ferner eine separate Massivplatte aus Polymer (30) zwischen dem ersten und dem zweiten Körper (12, 14) entlang des eng gekoppelten Abschnitts (22) der Verbindungsschnittstelle umfasst.

2. Verschluss nach Anspruch 1, wobei der Dichtungsabschnitt (24) der Verbindungsschnittstelle einen elastomeren Ring oder eine elastomere Dichtung umfasst und vorzugsweise ferner ein Rückhaltemerkmal umfasst, welches den elastomeren Ring oder die elastomere Dichtung hält.

3. Verschluss nach einem der vorhergehenden Ansprüche, wobei die separate Massivplatte aus Polymer (30) ein Polymer umfasst, das ausgewählt ist aus Polyimiden, Polyamiden, Polysulfonen, Polyaryletherketonen (z. B. Polyetheretherketon), Polyestern, Polyethern, Polypropylen oder Polyurethanen, Polycarbonaten.

4. Verschluss nach einem der vorhergehenden Ansprüche, wobei die separate Massivplatte aus Polymer (30) eine Dicke von weniger als 0,051 mm (0,002 Zoll) aufweist.

5. Verschluss nach einem der vorhergehenden Ansprüche, wobei der erste und der zweite Körper (12, 14) jeweils eine Titanlegierung und eine Aluminiumlegierung oder Stahl und eine Aluminiumlegierung oder eine Magnesiumlegierung und eine Aluminiumlegierung oder eine Magnesiumlegierung und Stahl oder eine Magnesiumlegierung und eine Titanlegierung umfassen.

6. Verschluss nach einem der vorhergehenden Ansprüche, ferner umfassend ein Befestigungselement, welches den ersten und den zweiten Körper (12, 14) entlang des eng gekoppelten Abschnitts (22) der Verbindungsschnittstelle verbindet, wobei das Befestigungselement vorzugsweise eine Vielzahl von gewundenen Befestigungselementen in Löchern durch den ersten und zweiten Körper entlang des eng gekoppelten Abschnitts der Verbindungsschnittstelle umfasst.

7. Verschluss nach einem der vorhergehenden Ansprüche, wobei der erste und der zweite Körper (12, 14) entlang ebenen Flächen in dem eng gekoppelten Abschnitt (22) der Verbindungsschnittstelle verbunden sind.

8. Verschluss nach einem der vorhergehenden Ansprüche, wobei die separate Massivplatte aus Polymer (30) die Gesamtheit des eng gekoppelten Abschnitts (22) der Verbindungsschnittstelle abdeckt.

9. Gehäuse, umfassend den Verschluss (16) nach einem der vorhergehenden Ansprüche, wobei der erste und der zweite Körper (12, 14), die miteinander verbunden sind, ein Gehäuse (10) um einen inneren Raum auf einer Seite des Verschlusses (16) bilden, wobei der Verschluss (16) sich vorzugsweise vollständig um einen Umfang des Gehäuses erstreckt.

10. Pumpe, umfassend ein Laufrad (48), das in einem Behälter (50) angeordnet ist, der den Verschluss (16) nach einem der vorhergehenden Ansprüche umfasst.

11. Verfahren zum Verbinden von Metallkörpern, umfassend:
Anordnen einer separaten Massivplatte aus Polymer (30) zwischen eng koppelnden Flächen des ersten und zweiten Körpers (12, 14), wobei der erste Körper (12) ein erstes Metall mit einem ersten Elektrodenpotential umfasst und der zweite Körper (14) ein zweites Metall mit einem zweiten Elektrodenpotential umfasst, das sich von dem ersten Elektrodenpotential unterscheidet; und
Verbinden des ersten Körpers (12) und des zweiten Körpers (14), um einen Verschluss entlang einer Verbindungsschnittstelle zu bilden, welche einen ersten Raum (18) auf einer ersten Seite des Verschlusses (16) von einem zweiten Raum (20) auf einer zweiten Seite des Verschlusses (16) trennt, wobei die Verbindungsschnittstelle sich von der ersten Seite des Verschlusses (16) zu der zweiten Seite des Verschlusses (16) erstreckt und einen eng gekoppelten Abschnitt (22) zwischen der ersten Seite des Verschlusses (16) und der zweiten Seite des Verschlusses (16), der die separate Massivplatte aus Polymer (30) zwischen eng koppelnden Flächen des ersten und zweiten Körpers (12, 14) umfasst, und einen Dichtungsabschnitt (24) zwischen der ersten Seite des Verschlusses (16) und der zweiten Seite des Verschlusses (16) umfasst.

12. Verfahren nach Anspruch 11, beinhaltend das Befestigen der separaten Massivplatte aus Polymer (30) an der eng koppelnden Fläche des ersten Körpers mit einem Klebstoff.

13. Verfahren nach Anspruch 11 oder 12, ferner umfassend das Anordnen einer separaten Massivplatte aus Polymer (30) an der eng koppelnden Fläche des zweiten Körpers (14).

14. Verfahren zum Warten des Verschlusses nach einem der Ansprüche 1-9, umfassend:
Trennen des ersten und des zweiten Körpers (12, 14);
Auflegen einer separaten Massivplatte aus Polymer (30) auf den eng koppelnden Abschnitt von einem oder beiden von dem ersten und dem zweiten Körper (12, 14); und
Wiederverbinden des ersten und des zweiten Körpers (12, 14) entlang der Verbindungsschnittstelle.

15. Verfahren nach Anspruch 14, ferner umfassend das Entfernen des Polymerrests von einem oder beiden von den eng koppelnden Abschnitten des ersten und zweiten Körpers (12, 14) nach dem Trennen des ersten und des zweiten Körpers (12, 14).

## Revendications

1. Fermeture (16), comprenant
un premier corps (12) comprenant un premier métal avec un premier potentiel d'électrode ; et
un second corps (14) comprenant un second métal avec un second potentiel d'électrode différent du premier potentiel d'électrode, lesdits premier et second corps (12, 14) étant joints ensemble le long d'une interface de connexion entre les premier et second corps pour former la fermeture séparant un premier espace (18) sur un premier côté de la fermeture (16) d'un second espace (20) sur un second côté de la fermeture (16), ladite interface de connexion s'étendant du premier côté de la fermeture (16) au second côté de la fermeture (16) et comprenant une partie étroitement couplée (22) entre le premier côté de la fermeture (16) et le second côté de la fermeture (16), et une partie d'étanchéité (24) entre le premier côté de la fermeture (16) et le second côté de la fermeture (16) ; **caractérisée en ce que** ladite fermeture comprend en outre une feuille solide discrète de polymère (30) entre les premier et second corps (12, 14) le long de la partie étroitement couplée (22) de l'interface de connexion.

2. Fermeture selon la revendication 1, dans laquelle la partie d'étanchéité (24) de l'interface de connexion comprend une bague ou un joint élastomère, et comprend en outre de préférence un élément de retenue qui retient la bague ou le joint élastomère.

3. Fermeture selon une quelconque revendication précédente, dans laquelle la feuille solide discrète de polymère (30) comprend un polymère choisi parmi les polyimides, les polyamides, les polysulfones, les polyaryléthercétones (par exemple le polyétheréthercétone), les polyesters, les polyéthers, le polypropylène ou les polyuréthanes, les polycarbonates.

4. Fermeture selon une quelconque revendication précédente, dans laquelle la feuille solide discrète de polymère (30) a une épaisseur inférieure à 0,051 mm (0,002 pouce).

5. Fermeture selon une quelconque revendication précédente, dans laquelle les premier et second corps (12, 14) comprennent, respectivement, un alliage de titane et un alliage d'aluminium, ou de l'acier et un alliage d'aluminium, ou un alliage de magnésium et un alliage d'aluminium, ou un alliage de magnésium et l'acier, ou un alliage de magnésium et un alliage de titane.

6. Fermeture selon une quelconque revendication précédente, comprenant en outre une attache joignant les premier et second corps (12, 14) le long de la partie étroitement couplée (22) de l'interface de connexion, ladite attache comprenant de préférence une pluralité d'attaches filetées dans des trous à travers les premier et second corps le long de la partie étroitement couplée de l'interface de connexion.

7. Fermeture selon une quelconque revendication précédente, dans laquelle les premier et second corps (12, 14) sont joints le long de surfaces planes dans la partie étroitement couplée (22) de l'interface de connexion.

8. Fermeture selon une quelconque revendication précédente, dans laquelle la feuille solide discrète de polymère (30) couvre la totalité de la partie étroitement couplée (22) de l'interface de connexion.

9. Enceinte comprenant la fermeture (16) selon une quelconque revendication précédente, dans laquelle lesdits premier et second corps (12, 14) joints ensemble forment une enceinte (10) autour d'un espace interne sur un côté de la fermeture (16), ladite fermeture (16) s'étendant de préférence entièrement autour d'un périmètre d'enceinte.

10. Pompe comprenant une roue (48) disposée dans un boîtier (50) comprenant la fermeture (16) selon une quelconque revendication précédente.

11. Procédé de jonction de corps métalliques, comprenant :
la disposition d'une feuille solide discrète de polymère (30) entre les surfaces étroitement couplées des premier et second corps (12, 14), ledit premier corps (12) comprenant un premier métal avec un premier potentiel d'électrode et ledit second corps (14) comprenant un second métal avec un second potentiel d'électrode différent du premier potentiel d'électrode ; et
la jonction du premier corps (12) et du second corps (14) pour former une fermeture le long d'une interface de connexion séparant un premier espace (18) sur un premier côté de la fermeture (16) d'un second espace (20) sur un second côté de la fermeture (16), ladite interface de connexion s'étendant du premier côté de la fermeture (16) au second côté de la fermeture (16) et comprenant une partie étroitement couplée (22) entre le premier côté de la fermeture (16) et le second côté de la fermeture (16) comprenant la feuille solide discrète de polymère (30) entre les surfaces étroitement couplées des premier et second corps (12, 14), et une partie d'étanchéité (24) entre le premier côté de la fermeture (16) et le second côté de la fermeture (16).

12. Procédé selon la revendication 11, comportant la fixation de la feuille solide discrète de polymère (30) à la surface étroitement couplée du premier corps avec un adhésif.

13. Procédé selon les revendications 11 ou 12, comprenant en outre la disposition d'une feuille solide discrète de polymère (30) sur la surface étroitement couplée du second corps (14) .

14. Procédé de maintenance de la fermeture selon l'une quelconque des revendications 1 à 9, comprenant :
la séparation des premier et second corps (12, 14) ;
l'application d'une feuille solide discrète de polymère (30) à la partie étroitement couplée de l'un ou des deux des premier et second corps (12, 14) ; et
la jonction à nouveau des premier et second corps (12, 14) le long de l'interface de connexion.

15. Procédé selon la revendication 14, comprenant en outre l'élimination des résidus de polymère de l'une ou des deux parties étroitement couplées des premier et second corps (12, 14) après séparation des premier et second corps (12, 14).
